# EUROPÄISCHE PATENTSCHRIFT

(11) **EP 4 338 863 B1**
(45) Veröffentlichungstag und Bekanntmachung des Hinweises auf die Patenterteilung: **28.01.2026**
(21) Anmeldenummer: 22195425.8
(22) Anmeldetag: 13.09.2022
(51) Int. Cl.: B21D 28/06, B21D 28/24, B21D 37/04, B23Q 1/28, B26D 5/02, B26D 7/26, B26F 1/02, B30B 15/04

(54) **TRÄGER FÜR BEARBEITUNGSWERKZEUGE FÜR EIN BANDMATERIAL UND VORRICHTUNG ZUR BEARBEITUNG EINES BANDMATERIALS**
SUPPORT FOR A PROCESSING TOOL FOR A STRIP MATERIAL AND DEVICE FOR PROCESSING A STRIP MATERIAL
SUPPORT POUR OUTILS D'USINAGE DE MATÉRIAU EN BANDE ET DISPOSITIF D'USINAGE DE MATÉRIAU EN BANDE

(43) Veröffentlichungstag der Anmeldung: 20.03.2024
(73) Patentinhaber: Rychiger AG, 3613 Steffisburg (CH)
(72) Erfinder: Aeschlimann, Daniel, 3600 Thun (CH); Dellsperger, René, 3612 Steffisburg (CH)
(74) Vertreter: Keller Schneider Patent- und Markenanwälte AG

(56) Entgegenhaltungen:
- EP-A1- 3 299 136
- EP-A1- 3 689 561
- EP-A2- 0 997 444
- FR-A1- 2 765 510
- GB-A- 2 174 635
- US-A- 4 604 934
- US-A1- 2006 255 083

## Beschreibung

### Technisches Gebiet

Die Anmeldung betrifft einen Träger für Bearbeitungswerkzeuge, welche zum Bearbeiten eines Bandmaterials geeignet sind. Ferner betrifft die Anmeldung eine Vorrichtung zum Bearbeiten eines Bandmaterials mit mindestens einem Träger für Bearbeitungswerkzeuge.

### Stand der Technik

Im Stand der Technik sind Träger für Bearbeitungswerkzeuge, insbesondere Träger, die entlang einer Linearführung quer zur Ausdehnungsrichtung eines Bandmaterials verschiebbar sind, bekannt.

Die US 4,604,934 (PPG Industries) offenbart ein System zum Positionieren mehrerer Wagen entlang einer eine Arbeitsfläche überspannenden Brücke. Der äusserste Wagen ist mit einer Antriebsvorrichtung verbunden, die weiteren Wagen lassen sich selektiv mit den benachbarten Wagen koppeln. Jeder Wagen (ausser der äusserste) lässt sich an einer Stange festklemmen. Zum Positionieren der Wagen werden sie zunächst in einer Startposition zusammengeschoben, anschliessend in der zusammengekoppelten Konfiguration mittels der Antriebsvorrichtung vorgezogen; sukzessive wird dann jeweils der hinterste Wagen an der entsprechenden Position vom Wagenzug gelöst und an der Stange festgeklemmt. Die Wagen weisen einen rechteckigen Grundkörper auf.

Die EP 0 997 444 (HEGLA) beschreibt ein Verfahren und eine Vorrichtung zum Positionieren von mehreren zumindest entlang zweier Raumachsen verschiebbaren Bearbeitungsköpfen einer Mehrkopf-Bearbeitungsmaschine. Dabei wird eine vollautomatische Positionierung der Bearbeitungsköpfe entlang einer einen Schneidtisch überspannenden Brücke ermöglicht. Die Bearbeitungsköpfe sind einzelnen Trägerschlitten zugeordnet und werden für die Positionierung zunächst engstmöglich zueinander angeordnet. Anschliessend werden die Schlitten durch einen der Schlitten, der entlang der Brückenlängsachse antreibbar ist, bewegt; nach Erreichen der jeweiligen Sollposition wird der betreffende Schlitten bezüglich der Brückenlängsachse arretiert, aus dem Verbund gelöst und an die bereits positionierten Schlitten gekoppelt. Dazu sind jeweils zwei benachbarte Trägerschlitten über jeweils eine Gleitstange verbunden, wobei sich jeweils einer der Schlitten mit Hilfe einer Klemmeinrichtung an der Gleitstange festklemmen lässt. Die Bearbeitungsköpfe liegen in der Form von Schlitten vor, an denen Bearbeitungswerkzeuge angebracht werden können.

EP 3 299 136 A1 offenbart einen Träger für Bearbeitungswerkzeuge für ein Bandmaterial umfassend: ein erstes Gehäuse zum halten eine obere rotierende Klinge und ein zweites Gehäuse zum Halten eine untere rotierende Klinge derart, dass die zwei Klingen zusammenwirken können, um ein zwischen der ersten und der zweiten Klinge verlaufendes Bandmaterial zu bearbeiten; einen Verbindungsbereich, welcher mit dem ersten und zweiten Gehäuse verbunden ist; zwei Lager mit welchen der Träger auf zwei parallelen Linearführungen beweglich angeordnet werden kann.

Insbesondere wenn zum Bearbeiten des Bandmaterials ein Werkzeug oder mehrere Werkzeuge beidseitig des Bandmaterials zusammenwirken müssen, ist eine möglichst hohe Stabilität eines Werkzeugträgers gefordert.

### Darstellung der Erfindung

Aufgabe der Erfindung ist es, einen dem eingangs genannten technischen Gebiet zugehörender Träger zu schaffen, welcher eine stabile Befestigung von Bearbeitungswerkzeugen ermöglicht, welche beidseitig eines Bandmaterials angeordnet sind und zur Bearbeitung des Bandmaterials zusammenwirken.

Die Lösung der Aufgabe ist durch die Merkmale des Anspruchs 1 definiert. Gemäss der Erfindung umfasst der Träger für Bearbeitungswerkzeuge für ein Bandmaterial einen ersten Arm mit einem ersten Ende und einem zweiten Ende sowie einen ersten Befestigungsbereich für ein oberes Bearbeitungswerkzeug, wobei der erste Befestigungsbereich im Bereich des ersten Endes des ersten Arms angeordnet ist. Der Träger weist ferner einen zweiten Arm auf, der parallel zum ersten Arm und zu diesem in einem ersten Abstand angeordnet ist, wobei der zweite Arm ein drittes und ein viertes Ende sowie einen zweiten Befestigungsbereich für ein unteres Bearbeitungswerkzeug aufweist, wobei der zweite Befestigungsbereich im Bereich des dritten Endes des zweiten Arms angeordnet ist, derart, dass das obere Bearbeitungswerkzeug und das untere Bearbeitungswerkzeug zusammenwirken können, um ein zwischen dem ersten Arm und dem zweiten Arm verlaufendes Bandmaterial zu bearbeiten. Zudem verfügt der Träger über einen Verbindungsarm, welcher mit dem zweiten Ende des ersten Arms sowie mit dem vierten Ende des zweiten Arms verbunden ist sowie einen ersten Schlitten und einen zweiten Schlitten, mit welchen der Träger auf zwei parallelen Linearführungen beweglich angeordnet werden kann, wobei der erste Schlitten am ersten Arm und der zweite Schlitten am zweiten Arm angeordnet sind.

Durch die erfindungsgemässe Anordnung der zwei Arme sowie des Verbindungsarms weist der Träger im Wesentlichen die Form eines C auf, wobei die miteinander wirkenden Bearbeitungswerkzeuge an den oberen und unteren Armen des C liegen. Dadurch ist eine besonders gute Stabilität des Trägers gegeben. Zudem können auf die Werkzeuge wirkenden I<räfte, welche z. B. beim Aufeinanderpressen der Bearbeitungswerkzeuge oder Teilen davon bei der Bearbeitung des Bandmaterials entstehen, optimal abgeleitet werden bzw. können sich die I<räfte gegenseitig aufheben. Durch die Anordnung von zwei Schlitten an den zwei Armen werden die Gewichtskräfte der Bearbeitungswerkzeuge sowie auf diese wirkende externe I<räfte, welche z. B. beim Bearbeiten des Bandmaterials entstehen, auf die Linearführungen optimal abgeführt, ohne dass sich dabei der Träger verbiegt oder verwindet.

Die am Träger befestigbaren Bearbeitungswerkzeuge sind vorzugsweise Stanzwerkzeuge und/oder Formwerkzeuge zum dreidimensionalen Formen des Bandmaterials. Alternativ können jedoch auch andere Bearbeitungswerkzeuge am Träger befestigt werden, wie z. B. Presswerkzeuge.

Das mit den Bearbeitungswerkzeugen bearbeitete Bandmaterial ist vorzugsweise ein Metall-, Papier-, Papp- oder Kunststoffband. Die Dicke des Bandmaterials kann unterschiedlich sein, liegt jedoch vorzugsweise im Bereich von 0.1 mm bis 10 mm.

Der Träger besteht vorzugsweise aus einem Metall oder einer Metalllegierung, insbesondere aus Aluminium, Stahl oder Edelstahl. Alternativ besteht der Träger jedoch aus einem Kunststoff, insbesondere einem faserverstärkten Kunststoff, wobei der Kunststoff als Verstärkung Glas- oder I<ohlestofffasern aufweisen kann. Die Arme sowie der Verbindungsarm sind vorzugsweise miteinander verschweisst oder verschraubt. Alternativ kann der Arm jedoch auch einstückig ausgebildet sein.

Der erste sowie der zweite Befestigungsbereich weisen vorzugsweise mindestens ein Befestigungselement auf, mit welchem ein Bearbeitungswerkzeug am Arm befestigt werden kann. Das mindestens eine Befestigungselement kann unterschiedlich ausgestaltet sein, z. B. in der Form einer Bohrung, einer I<upplung, eines Hakens, eines Stifts oder dergleichen. Die Befestigungsbereiche können auch über mehrere Befestigungselemente verfügen, welche auch unterschiedlich ausgestaltet sein können. Vorzugsweise weisen die Befestigungsbereiche I<upplungen auf, welche insbesondere werkzeugfrei gelöst und geschlossen werden können, damit der Träger schnell und einfach für eine andere Bearbeitung des Bandmaterials umgerüstet werden kann.

Der erste Abstand ist für den Träger vorzugsweise fix und nicht einstellbar, wobei der erste Abstand derart gewählt wird, dass die zur Befestigung am Träger vorgesehenen Bearbeitungswerkzeuge optimal zusammenwirken können. Dabei entspricht der erste Abstand vorzugsweise der Länge des Verbindungsarms. Alternativ bevorzugt kann der Träger jedoch auch über Verstellmittel verfügen, mit denen sich der erste Abstand verändern lässt. Dadurch kann eine höhere Flexibilität beim Einsatz des Trägers erzielt werden.

Der erste Arm ist vorzugsweise bei der bestimmungsgemässen Verwendung des Trägers oberhalb des zweiten Arms angeordnet, wobei der Verbindungsarm bevorzug vertikal ausgerichtet ist. Je nach Anwendung des Trägers bzw. der Ausrichtung des Bandmaterials können auch andere Ausrichtungen möglich sein, z. B. eine horizontale Ausrichtung des Verbindungsarms, wobei der erste und der zweite Arm in horizontaler Richtung beidseitig des Verbindungsarms angeordnet sein.

Der Verbindungsarm kann gerade sein oder auch vorzugsweise über mindestens einen I<nick oder über mindestens einen Bogen verfügen.

Die beiden Arme sowie der Verbindungsarm können beliebige, an die zu erwartenden auf diese wirkenden I<räfte angepasste Querschnitte und Dimensionen aufweisen. Die zwei Arme sowie der Verbindungsarm sind vorzugsweise Profile, insbesondere L-, H- oder U-Profile. Die Verwendung von Profilen ermöglicht eine hohe Steifheit der Arme und des Verbindungsarms bei gleichzeitig geringem Gewicht.

Der erste Arm und der zweite Arm sind vorzugsweise gleich lang, d.h. der Abstand zwischen dem ersten und dem zweiten Ende ist gleich gross wie der Abstand zwischen dem dritten und dem vierten Ende. Alternativ können die beiden Arme jedoch unterschiedlich lang, d.h. ein Abstand zwischen dem ersten Ende und dem zweiten Ende ist unterschiedlich zu einem Abstand zwischen dem dritten und vierten Ende. In einer bevorzugten Ausführungsform ist der insbesondere unten liegende zweite Arm länger als der erste Arm.

Der erste Arm und/oder der zweite Arm können sich zusätzlich zu ihrer bei bestimmungsgemässen Gebrauch horizontale Erstreckung auch in vertikaler Richtung erstrecken, das heisst in einer Richtung, die im rechten Winkel zur Erstreckung der Arme zwischen erstem und zweitem bzw. drittem und viertem Ende steht. Die Erstreckung des ersten und/oder zweiten Arms in vertikaler Richtung kann hierbei über die gesamte Länge des jeweiligen Arms gleich sein oder auch entlang der Länge variieren. Dadurch kann die Form der Arme sowohl in horizontaler wie auch in vertikaler Richtung angepasst werden, beispielsweise um genügend Platz zur Anordnung weiterer Komponenten, wie z.B. der Schlitten und der Bearbeitungswerkzeuge zu schaffen.

Der erste und der zweite Schlitten verfügen vorzugsweise über mindesten eine Rolle oder mindestens ein Rad, mit der die Schlitten jeweils auf der Linearführung aufliegen. Alternativ können die Schlitten jedoch auch über Gleitlager verfügen. Dementsprechend werden auch die Linearführungen einer Vorrichtung, auf welcher der Träger eingesetzt wird, über entsprechende Mittel verfügen, um die mindestens eine Rolle, das mindestens eine Rad oder das mindestens eine Gleitlager aufzunehmen und zu führen, insbesondere über eine Rille, Schiene oder ein Gegenlager.

Vorzugsweise sind der erste Schlitten und der zweite Schlitten derart ausgestaltet, dass der Träger quer zur Ausdehnungsrichtung des ersten Arms und des zweiten Arms auf zwei Linearführungen bewegbar ist.

Dadurch ragen die beiden Arme des Trägers von den Linearführungen, auf denen der Träger angeordnet ist, ab, insbesondere im rechten Winkel.

Am Träger ist vorzugsweise eine I<opplungseinrichtung angebracht, mit der sich der Träger selektiv mit einer parallel zu den zwei Linearführungen, auf denen die zwei Schlitten beweglich angeordnet werden können, beweglichen Schubstange gekoppelt werden kann, so dass der Träger im gekoppelten Zustand durch die Schubstange entlang der zwei Linearführungen bewegt werden kann.

Durch I<oppeln mit der Schubstange kann der Träger somit durch diese entlang der zwei Linearführungen bewegt werden. Durch selektives Abkoppeln des Trägers von der Schubstange kann dieser an einer bestimmten Position entlang der beiden Linearführungen positioniert werden, ohne durch weitere Bewegungen der Schubstange bewegt zu werden. Ein derartiges selektives System kann beispielsweise verwendet werden, um bei der Anordnung von mehreren Trägern an einer Vorrichtung den Abstand zwischen den Trägern zu verändern oder je nach Bearbeitung des Bandmaterials einzelne Träger, deren Bearbeitungswerkzeuge nicht eingesetzt werden müssen, unbeweglich an einer Parkposition stehen zu belassen.

Die I<opplungseinrichtung ist vorzugsweise als Stangenklemmung ausgeführt. Die Stangenklemmung verfügt vorzugsweise über eine Durchführungsöffnung, durch welche eine Schubstange durchgeführt werden kann. Innerhalb der Durchführungsöffnung ist vorzugsweise mindestens ein Klemmelement angeordnet, welches selektiv mittels eine Aktuators auf eine durch die Durchführungsöffnung durchgeführte Schubstange gedrückt werden kann, um die Schubstange in der Durchführungsöffnung zu verklemmen.

In einer alternativ bevorzugten Ausführungsform ist am Träger ein Antrieb angeordnet, mit welchem der Träger entlang zweier Linearführungen, auf denen die zwei Schlitten beweglich angeordnet werden können, bewegt werden kann.

Durch den Antrieb kann der Träger somit selbsttätig entlang der beiden Linearführungen bewegt werden. Der Antrieb kann in jeder geeigneten Form vorliegen, z. B. in der Form eines hydraulischen, elektrischen oder elektromechanischen Antriebs. Der Antrieb wirkt vorzugsweise mit mindestens einer der Linearführungen oder mit einem anderen Element der Vorrichtung zusammen, um den Träger entlang der zwei Linearführungen zu bewegen. Beispielsweise kann der Antrieb über ein Zahnrad verfügen, welches in eine Zahnstange eingreift.

Vorzugsweise verfügt der Träger über eine Hohlwelle, welche mittels eines Elektromotors in Drehung versetzt wird, wobei die Hohlwelle im Innern über mindestens einen Stift oder über ein Innengewinde verfügt, um die Hohlwelle in Eingriff mit einer Gewindestange zu bringen.

Dadurch kann ein relativ einfach aufgebauter, jedoch sehr zuverlässiger und präziser Antrieb des Trägers geschaffen werden. Die Gewindestange ist dabei vorzugsweise ein Bestandteil einer Vorrichtung, auf welcher der Träger angeordnet ist, wobei die Gewindestange unbeweglich an der Vorrichtung befestigt ist.

Der Träger verfügt vorzugsweise über einen Haltearm, an welchem eine Schleppkette angebracht werden kann. Durch das Anbringen einer Schleppkette können Kabel und/oder Leitungen zum Träger geführt werden, mit denen an den Befestigungsbereichen angebrachte Bearbeitungswerkzeuge sowie ein allenfalls auf dem Arm angeordneter Antrieb mit Strom, Steuersignalen, Druckluft und/oder einer Flüssigkeit, z. B. einer I<ühlflüssigkeit oder einer Hydraulikflüssigkeit versorgt werden können.

Der Haltearm verfügt vorzugsweise über Stecker, Buchsen und/oder I<upplungen, mit denen die I<abel und/oder Leitungen, die durch die Schleppkette zum Träger geführt werden, mit auf diesem angeordneten I<abeln und/oder Leitungen lösbar verbunden werden können. Dies vereinfacht das Anordnen des Arms an oder das Entfernen des Amrs aus einer Vorrichtung.

Der Haltearm verfügt vorzugsweise über Befestigungsmittel, mit denen eine Schleppkette an diese befestigt werden kann. Die Befestigungsmittel weisen vorzugsweise eine I<upplung oder Aufnahmeöffnung für die Schleppkette auf.

Zum Führen der I<abel und/oder Leitungen auf dem Träger verfügt dieser vorzugsweise über ein I<abelführungselement, welches sich vorzugsweise vom Haltearm zum ersten Arm sowie zum zweiten Arm erstreckt.

Der Haltearm erstreckt sich vorzugsweise in eine Richtung, der der Ausdehnungsrichtung des ersten Arms und des zweiten Arms entgegengesetzt ist. Durch diese Ausgestaltung kann sichergestellt werden, dass sich die Schleppkette nicht in den zwei Armen bzw. den daran befestigten Bearbeitungswerkzeugen verhakt. Vorzugsweise ist die Länge des Haltearms in Abhängigkeit der Vorrichtung, auf welcher der Haltearm angeordnet werden soll, derart gewählt, dass die Schleppkette auf der den Armen gegenüberliegenden Seite der Linearführungen verläuft. So kann verhindert werden, dass bei der Verwendung von mehreren Trägern auf einer Vorrichtung eine Schleppkette zwischen zwei Trägern verläuft oder zwischen diesen eingeklemmt wird.

Vorzugsweise verfügt der Träger über ein Positionierelement, mit welchem der Träger an einer Position entlang zweier Linearführungen, auf denen die zwei Schlitten beweglich angeordnet sind, verriegelt werden kann.

Durch das Positionierelement kann der Träger insbesondere auf einer Parkposition verriegelt werden. Das Positionierelement wirkt hierbei vorzugsweise mit mindestens einer der Linearführungen oder mit einem an mindestens einer der Linearführungen angeordnetes Verriegelungselement zusammen, um den Träger an der Position zu verriegeln.

Das Positionierelement ist vorzugsweise als Aufnahme ausgestaltet, welche lösbar mit einem Stift verriegelt werden kann, wobei der Stift vorzugsweise an mindestens einer der Linearführungen angeordnet ist. Alternativ kann das Positionierelement jedoch auch anders ausgestaltet sein, z. B. als Klemme, Bremse oder dergleichen. Ferner kann das Positionierelement auch ein bewegliches Element aufweisen, welches selektiv mit einer der Linearführungen, auf denen die Schlitten angeordnet sind, zusammenwirken kann, z. B. auf diese gedrückt werden kann.

Die vorliegende Anmeldung betrifft weiter eine Vorrichtung zum Schneiden und/oder dreidimensionalen Formen eines Bandmaterials, welche mindestens einen Träger gemäss der weiter vorn stehenden Beschreibung sowie zwei parallele Linearführungen umfasst, auf denen der erste Schlitten sowie der zweite Schlitten des mindestens einen Trägers beweglich angeordnet sind.

An den zwei Befestigungsbereichen des mindestens einen Trägers sind vorzugsweise Bearbeitungswerkzeuge befestigt, insbesondere Stanz- und/oder Formwerkzeuge. Die Bearbeitungswerkzeuge wirken dabei zusammen, um insbesondere ein Formteil aus dem Bandmaterial herzustellen, beispielsweise zu schneiden und anschliessend dreidimensional zu formen. Hierbei kann beispielsweise am ersten Befestigungsbereich ein Bearbeitungswerkzeug mit einer Klinge, insbesondere mit einer Rundklinge angeordnet sein, während am zweiten Befestigungsbereich ein Bearbeitungswerkzeug mit einer zur Klinge komplementären Scherkante angeordnet ist. Klinge wie auch Scherkante sind vorzugsweise gegen das Bandmaterial sowie mittels eines Antriebs gegeneinander bewegbar. Die Bearbeitungswerkezeuge können bei der Herstellung eines Formteils aus dem Bandmaterial mehrere Bearbeitungsschritte ausführen, zum Beispiel die bereits erwähnte Abfolge der Bearbeitungsschritte Schneiden und dreidimensionales Formen. Die zur Bearbeitung des Bandmaterials nötige Abfolge von Bearbeitungsschritten ergibt einen Bearbeitungstakt. Beim bereits erwähnten Beispiel für die Herstellung eines tiefgezogenen Formteils bilden daher die Bearbeitungsschritte des Schneidens und anschliessenden dreidimensionalen Formens zusammen einen Bearbeitungstakt.

Die Vorrichtung umfasst vorzugsweise eine Mehrzahl an Trägern, das heisst mehr als einen Träger, insbesondere mehr als 5 Träger, bevorzugt 10, 11 oder 12 Träger. Die maximale Anzahl an Trägern, die an der Vorrichtung angeordnet sein können, ergibt sich aus der Breite des bearbeiteten Bandmaterials sowie aus den Dimensionen der Bearbeitungswerkzeuge.

Durch eine Bewegung der Träger auf den zwei parallelen Linearführungen kann ein Abstand zwischen den Trägern je nach der beabsichtigten Bearbeitung eingestellt werden. Ferner ist es auch möglich, die Träger nach einem Bearbeitungstakt jeweils um eine bestimmte Distanz entlang der zwei parallelen Linearführungen zu bewegen, um eine optimale Materialausnutzung des bearbeiteten Bandmaterials zu erzielen. In einer bevorzugten Ausführungsform werden mittels der Vorrichtung kreisrunde Formteile aus einem Bandmaterial ausgestanzt, wobei nach jedem Bearbeitungstakt alle Träger jeweils mindestens um den halben Durchmesser der kreisrunden Formteile bewegt werden, so dass durch diese Versetzung eine möglichst optimale Ausnutzung der Oberfläche des Bandmaterials beim Ausschneiden der kreisrunden Formteile erzielt werden kann. Das Bandmaterial wird nach jedem Bearbeitungstakt jeweils um mindestens den halben Durchmesser der kreisrunden Formteile bewegt, so dass sich beim Schneiden keine Überschneidungen mit bereits ausgestanztem Material ergeben, was zu nicht ganz kreisrunden und somit im Wesentlichen unbrauchbaren Formteilen führen würde.

Die Vorrichtung weist vorzugsweise ein Gestell auf, auf welchem die zwei parallelen Linearführungen angebracht sind. Ferner umfasst die Vorrichtung bevorzugt eine Steuerung, mit welcher die Bewegung der Träger entlang der zwei parallelen Linearführungen sowie Antrieben von an den Befestigungsbereichen des mindestens einen Trägers angebrachten Bearbeitungswerkzeugen gesteuert werden können.

Vorzugsweise verfügt die Vorrichtung über Fördermittel, um ein Bandmaterial zwischen den ersten und den zweiten Arm des mindestens einen Trägers zuzuführen und zwischen diesen linear zu bewegen.

Die Zuführ- und Bewegungsrichtung des Bandmaterials erstreckt sich vorzugsweise parallel zur Ausdehnungsrichtung des ersten und des zweiten Arms.

Die Fördermittel können je nach Art des mit der Vorrichtung zu bearbeitenden Bandmaterials unterschiedlich ausgestaltet sein. Vorzugsweise verfügt das Fördermittel über mindestens eine angetriebene Rolle oder Walze, auf welcher das Bandmaterial aufliegt. Möglich sind auch Rollen- oder Walzenpaare, zwischen denen das Bandmaterial durchläuft. Weiter bevorzugt kann die Vorrichtung auch über ein Förderband oder ein Rollenband verfügen, auf welchem das Bandmaterial aufliegt. Alternativ bevorzugt können die Fördermittel auch als Vakuumband ausgestaltet sein.

Vorzugsweise verfügt die Vorrichtung über eine Aufhängung, an welcher eine Rolle des Bandmaterials angebracht werden kann, wobei das Bandmaterial von der Rolle abgewickelt und zwischen die Arme des mindestens einen Trägers zugeführt wird.

Vorzugsweise sind die Fördermittel derart konfiguriert, dass ein Bandmaterial in der Ausdehnungsrichtung des ersten Arms und des zweiten Arms zwischen diesen zugeführt und zwischen diesen linear bewegt wird, wobei die Vorrichtung über mindestens ein Schneidelement verfügt, mit welchem das Bandmaterial nach dessen Bearbeitung durch am ersten Befestigungsbereich und am zweiten Befestigungsbereich angebrachten Bearbeitungswerkzeugen abgelängt werden kann.

Das heisst, dass das Bandmaterial vom ersten Ende des ersten Arms bzw. dritten Endes des zweiten Arms in Richtung des Verbindungsarms bewegt wird. Damit das Bandmaterial bzw. die Reste hiervon (z. B. die Überreste des Bandmaterials nach dem Ausschneiden der Formteile) nach der Bearbeitung nicht auf dem Verbindungsarm auflaufen, wird das Bandmaterial durch das mindestens eine Schneidelement abgelängt, d.h. geschnitten. Die abgelängten Teile des Bandmaterials werden über eine Abführvorrichtung anschliessend von den Trägern wegbefördert, insbesondere in einen Abfallbehälter.

Das mindestens eine Schneidelement kann nach jedem Bearbeitungstakt des Bandmaterials durch die Bearbeitungswerkerzeuge ablängen, vorzugsweise wird das Bandmaterial jedoch nach einer vordefinierten Anzahl an Bearbeitungstakten durch das Schneidelement abgelängt, insbesondere nach 2, 3, 4, 5 oder mehr Bearbeitungstakten.

Das mindestens eine Schneidelement ist vorzugsweise als Klinge ausgestaltet, welche quer zur Längsrichtung des Bandmaterials verschiebbar gelagert ist, um das Bandmaterial zu zerschneiden.

Vorzugsweise verfügt die Vorrichtung über eine linear bewegliche Schubstange oder über eine linear bewegliche oder starre Gewindestange, mit Hilfe welcher der mindestens eine Träger entlang der zwei Linearführungen bewegt werden kann.

Sofern die Vorrichtung über eine linear bewegliche Schubstange verfügt, weist der mindestens eine Träger eine I<opplungseinrichtung auf, mit welcher sich der mindestens eine Träger selektiv mit der Schubstange koppeln lässt. Ist der mindestens eine Träger über die I<opplungseinrichtung mit der Schubstange gekoppelt, so wird dieser bei einer Bewegung der Schubstange mitbewegt.

Sofern die Vorrichtung über eine Gewindestange verfügt, weist der mindestens eine Träger einen Antrieb auf, der mit der Gewindestange zusammenwirkt, um den Träger entlang der zwei parallelen Linearführungen zu bewegen. Vorzugsweise verfügt der Antrieb in diesem Fall über eine Hohlwelle, in welcher die Gewindestange aufgenommen ist und die mit der Gewindestange zusammenwirkt, so dass durch Drehung der Hohlwelle relativ zur Gewindestange der Träger relativ zu dieser und entlang der zwei parallelen Linearführungen bewegt werden kann.

Wenn die Gewindestange beweglich an der Vorrichtung angeordnet ist, lassen sich alle an der Vorrichtung angeordneten Träger durch eine Bewegung der Gewindestange gleichzeitig bewegen. Der Antrieb der Träger wird bei dieser Ausführungsform demnach lediglich dazu verwendet, den Abstand zwischen den Trägern zu verstellen.

Wenn die Gewindestange hingegen starr an der Vorrichtung angeordnet ist, kann über den Antrieb der Träger sowohl der Abstand zwischen den Trägern verändert wie auch eine Bewegung aller Träger oder von einzelnen Trägern entlang der zwei parallelen Linearführungen erzielt werden.

Die Schubstange bzw. die bewegliche Gewindestange wird vorzugsweise entlang einer Achse, die parallel zu den zwei parallelen Linearführungen liegt, durch einen Antrieb in zwei Richtungen in Bewegung gesetzt. Der Antrieb ist vorzugsweise ein hydraulischer, pneumatischer, elektrischer oder elektromechanischer Antrieb. In einer bevorzugten Ausführungsform ist die Schubstange bzw. die bewegliche Gewindestange mit einem Ende mit einem Wagen verbunden, welcher durch den Antrieb linear bewegt wird. Der Antrieb ist oder umfasst vorzugsweise einen Servomotor oder einen Linearantrieb.

Vorzugsweise ist der Wagen bei dieser Ausführungsform über einen Zahnriemen mit dem Abtrieb eines Elektromotors verbunden. Sofern die Vorrichtung über eine bewegliche Gewindestange verfügt ist die Gewindestange vorzugsweise derart beweglich gelagert, dass bei der Bewegung derselben keine Drehung der Gewindestange um ihre Längsachse erzeugt wird, da ansonsten der Abstand der an der Vorrichtung angeordneten Träger verändert würde.

Vorzugsweise verfügt die Vorrichtung über mindestens eine Schleppkette, welche mit dem mindestens einen Träger verbunden ist, vorzugsweise mit dem Haltearm des mindestens einen Trägers.

Mit der mindestens einen Schleppkette können Kabel und/und oder Leitungen zum Träger geführt werden, mit denen die Bearbeitungswerkzeuge sowie ein allenfalls auf dem Arm angeordneter Antrieb mit Strom, Steuersignalen, Druckluft und/oder einer Flüssigkeit, z. B. einer Kühlflüssigkeit oder einer Hydraulikflüssigkeit versorgt werden können.

Vorzugsweise verfügt die Vorrichtung für jeden auf dieser angeordneten Träger über eine separate Schleppkette. Die mindestens eine Schleppkette ist vorzugsweise derart konfiguriert, dass sich diese in alle drei Raumrichtungen biegen lässt. Sofern an der Vorrichtung mehrere Träger angeordnet sind und pro Träger eine Schleppkette vorhanden ist, sind die Schleppketten vorzugsweise derart nebeneinander angeordnet, dass sich diese auch bei einer Bewegung der Träger entlang der zwei parallelen Linearführungen nicht miteinander verheddern. Insbesondere bevorzugt sind die Schleppketten hierbei parallel zur Erstreckungsrichtung der zwei parallelen Linearführungen nebeneinander angeordnet.

Im Folgenden wird ein Verfahren zum Herstellen von Stanz- und oder Formteilen aus einem Bandmaterial mit einer definierten Breite mittels mindestens zwei Bearbeitungswerkzeugen beschrieben, welches nicht zur vorliegenden Erfindung gehört. Die mindestens zwei Bearbeitungswerkzeuge sind je an einem Träger angeordnet, wobei die mindestens zwei Träger entlang mindestens einer Linearführung linear verschiebbar gelagert sind. In einem ersten Schritt des Verfahrens wird das Bandmaterial in einer Förderrichtung, die im rechten Winkel zur mindestens einen Linearführung liegt, den mindestens zwei Bearbeitungswerkzeugen zugeführt. Dabei ist das Bandmaterial derart ausgerichtet, dass dessen definierte Breite parallel zur mindestens einen Linearführung ist. Anschliessend wird das Bandmaterial in einer Mehrzahl von Arbeitstakten zu einer Vielzahl von Stanz- und/oder Formteilen durch Schneiden und/oder dreidimensionalem Formen des Bandmaterials mittels der mindestens zwei Bearbeitungswerkzeugen verarbeitet, wobei nach jedem Arbeitstakt das Bandmaterial in der Förderrichtung um eine Förderdistanz bewegt wird, die grösser ist als die Ausdehnung der mindestens zwei Bearbeitungswerkzeuge in der Förderrichtung. Innerhalb jeden Arbeitstaktes wird mindestens einer der Träger mindestens einmal linear entlang der mindestens einen Linearführung bewegt, so dass das Bandmaterial mittels der mindestens zwei Bearbeitungswerkzeuge das Bandmaterial in jedem Arbeitstakt über die gesamte definierte Breite gestanzt und/oder dreidimensional geformt wird.

Das Verfahren wird vorzugsweise mit einer erfindungsgemässen Vorrichtung gemäss weiter vorne stehender Beschreibung durchgeführt. Die im Verfahren verwendeten Träger für die Bearbeitungswerkzeuge entsprechen vorzugsweise den erfindungsgemässen Trägern gemäss weiter vorne stehender Beschreibung. Mit dem erfindungsgemässen Verfahren kann eine Verarbeitung des Bandmaterials zu Stanz- und/oder Formteilen über dessen gesamte definierte Breite durchgeführt werden, ohne dass hierbei die zur Abdeckung der definierte Breite nötige Anzahl an Bearbeitungswerkzeugen vorgesehen werden muss. Das heisst, dass die Verarbeitung mit weniger Werkzeugen durchgeführt werden kann, als rechnerisch zur Abdeckung der gesamten definierten Breite nötig wären.

Das beschriebene Verfahren ermöglicht somit eine effiziente Ausnutzung des Bandmaterials bei einer gleichzeitig reduzierten Anzahl der hierzu nötigen Bearbeitungswerkzeuge bzw. Werkzeugträger.

In jedem Arbeitstakt wird das Bandmaterial entlang der gesamten definierte Breite bearbeitet, das heisst, dass mittels der mindestens zwei Bearbeitungswerkzeuge über die gesamte definierte Breite Stanz- und/oder Formteile aus dem Bandmaterial hergestellt werden.

Während des Arbeitstaktes kann der mindestens eine Träger in beide Richtungen entlang der mindestens einen Linearführung bewegt werden, wobei der mindestens eine Träger jeweils mindestens einmal in beide Richtungen bewegt wird. Jede Bewegung des mindestens einen Trägers erfolgt vorzugsweise über eine vorbestimmte Distanz, welche grösser ist als die Ausdehnung der mindestens zwei Werkzeuge in Richtung der mindestens einen Linearführung. So kann sichergestellt werden, dass das Bandmaterial nicht in sich überlappenden Bereichen gestanzt und/oder dreidimensional geformt wird.

Vorzugsweise werden innerhalb jeden Arbeitstaktes alle der mindestens zwei Träger mindestens einmal linear entlang der mindestens einen Linearführung bewegt. Dadurch wird eine möglichst effiziente Bearbeitung des Bandmaterials unter Einbezug aller vorhandenen Träger bzw. den daran befestigten Bearbeitungswerkzeugen erzielt.

Die Abfolge der aufeinanderfolgenden Bewegungen eines Trägers entlang der mindestens einen Linearführung ist vorzugsweise nicht in allen Arbeitstakten identisch. Insbesondere bevorzugt wird die Richtung der aufeinanderfolgenden Bewegungen jeden Trägers in jedem zweiten Arbeitstakt umgekehrt. Alternativ bevorzugt kann die Abfolge der Bewegungen eines Trägers in jedem Arbeitstakt identisch sein. Weiter alternativ bevorzugt kann sich die Abfolge der Bewegungen eines Trägers nach einer bestimmten Anzahl an Arbeitstakten wiederholen, so dass die Abfolge sich z.B. alle 2, 3, 4, 5 oder mehr Arbeitstakte wiederholt.

Die Träger führen vorzugsweise nicht alle dieselbe Abfolge von Bewegungen pro Arbeitstakt aus, sondern jeder Träger wird vorzugsweise eine spezifische Abfolge von Bewegungen vollziehen.

Vorzugsweise bearbeiten alle der mindestens zwei Bearbeitungswerkzeuge pro Arbeitstakt das Bandmaterial, führen also einen Stanz- und/oder dreidimensionalen Formvorgang durch. Alternativ bevorzugt kann pro Arbeitstakt jedoch auch nur mindestens eines der mindestens zwei Bearbeitungswerkzeuge das Bandmaterial bearbeiten.

Dadurch, dass die Bewegung jeden Trägers sowie die Bearbeitung des Bandmaterials jedes Bearbeitungswerkzeugs pro Arbeitstakt unterschiedlich sein kann, kann für jede mögliche definierte Breite des Bandmaterials sowie für jede Ausführungsform und Dimensionierung der mindestens zwei Bearbeitungswerkezuge eine optimale Abfolge von Bewegungen des zugehörigen Trägers in jedem Arbeitstakt vorgesehen werden.

Das beschriebene, nicht zur vorliegenden Erfindung gehörende Verfahren wird vorzugweise durch ein Computerprogramm gesteuert, welches insbesondere Teil einer Steuerung einer erfindungsgemässen Vorrichtung ist oder mit dieser elektrisch verbunden werden kann, um dieser Steuerbefehle zu übermitteln.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Ansicht einer ersten Ausführungsform eines erfindungsgemässen Trägers von der Seite;
- Fig. 2, 3: eine zweite Ausführungsform eines erfindungsgemässen Trägers in einer perspektivischen Ansicht;
- Fig. 4: eine erfindungsgemässe Vorrichtung mit mehreren Trägern;
- Fig. 5: das Zusammenwirken einer Ausführungsform eines Positionierelements mit einem Verriegelungselement;
- Fig. 6: schematisch eine weitere Ausführungsform eines erfindungsgemässen Trägers.

Grundsätzlich sind in den Figuren gleiche Teile mit gleichen Bezugszeichen versehen.

### Wege zur Ausführung der Erfindung

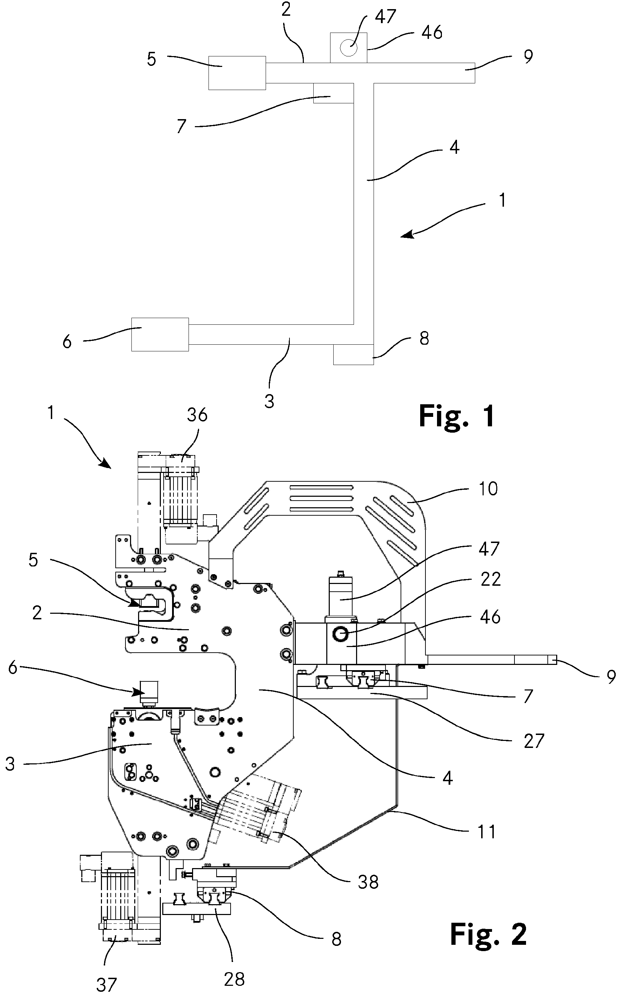

Die Fig. 1 zeigt eine schematische Ansicht einer ersten Ausführungsform eines erfindungsgemässen Trägers 1 von der Seite. Der Träger 1 weist einen ersten Arm 2 mit einem ersten und einem zweiten Ende auf, wobei im Bereich des ersten Endes ein erster Befestigungsbereich 5 zum Befestigen eines oberen Bearbeitungswerkzeugs angeordnet ist. Der Träger weist ferner einen zweiten Arm 3 mit einem dritten und einem vierten Ende auf, wobei im Bereich des dritten Endes ein zweiter Befestigungsbereich 6 für ein unteres Bearbeitungswerkzeug angeordnet ist. Das zweite Ende des ersten Arms 2 und das vierte Ende des zweiten Arms 3 sind über einen Verbindungsarm 4 miteinander verbunden. Der erste Arm 2 und der zweite Arm 3 verlaufen parallel zueinander und sind in einem ersten Abstand zueinander angeordnet. Der Träger 1 weist einen ersten Schlitten 7, der am ersten Arm 2 angeordnet ist, sowie eine zweiten Schlitten 8, der am zweiten Arm 3 angeordnet ist, auf. Mittels der Schlitten 7, 8 kann der Träger 1 an zwei parallelen Linearführungen beweglich angeordnet werden. Am Träger 1 werden vorzugsweise Bearbeitungswerkzeuge zum Schneiden und/oder dreidimensionalen Formen eines Bandmaterial an den zwei Befestigungsbereichen 5, 6 angebracht. Der Träger 1 umfasst ferner noch einen Haltearm 9, der bei der gezeigten Ausführungsform am zweiten Ende des erste Arms 2 angebracht ist, an welchem eine Schleppkette (nicht gezeigt) angebracht werden kann, z. B. um die an den Befestigungsbereichen 5, 6 angebrachten Bearbeitungswerkzeuge mit Steuersignalen, Strom, Druckluft oder Flüssigkeiten versorgen zu können.

Bei der gezeigten Ausführungsform ist am ersten Arm 2 eine als Stangenklemmung 46 ausgestaltete I<opplungseinrichtung angeordnet. Die Stangenklemmung 46 weist eine Durchführungsöffnung 47 auf. Innerhalb der Durchführungsöffnung befindet sich ein Klemmelement (nicht gezeigt), welches selektiv auf eine innerhalb der Durchführungsöffnung 47 durchgeführten Schubstange (nicht gezeigt) gedrückt werden kann, um diese innerhalb der Durchführungsöffnung 47 zu klemmen. Durch das Klemmen der Schubstange wird der Träger 1 selektiv an diese gekoppelt.

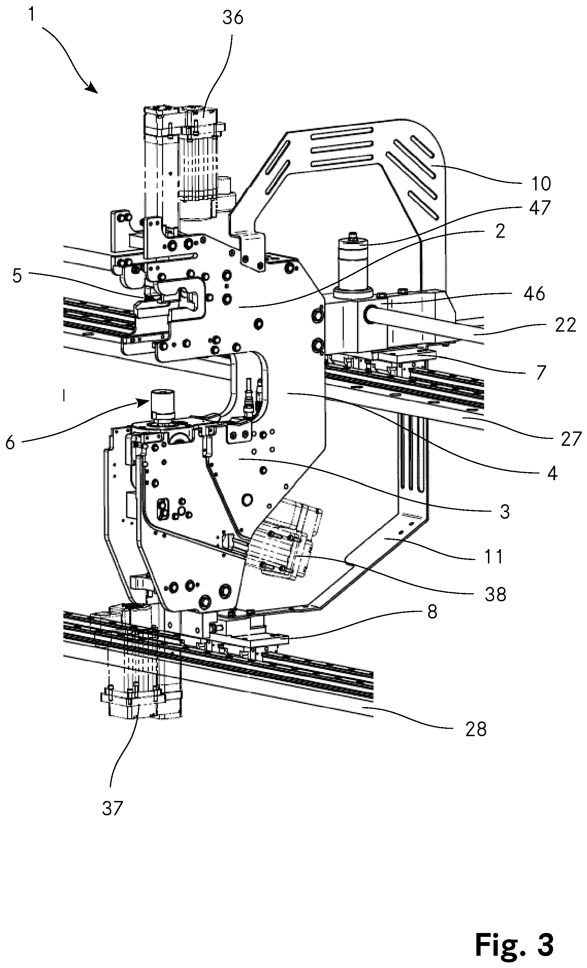

Auf der Fig. 2 und der Fig. 3 ist eine zweite Ausführungsform eines erfindungsgemässen Trägers 1 in einer Seitenansicht bzw. einer perspektivischen Ansicht dargestellt. Wie gut ersichtlich ist, sind die beiden Schlitten 7, 8 derart konfiguriert, dass der Träger 1 bei der Anordnung auf zwei parallelen Linearführungen 27, 28 im rechten Winkel zur Ausdehnung des ersten Arms 2 und des zweiten Arms 3 beweglich ist. Die beiden Linearführungen 27, 28 wie auch die beiden Schlitten 7, 8 sind sowohl in vertikaler wie auch in horizontaler Richtung relativ zueinander versetzt angeordnet. Auf den Figuren gut ersichtlich ist, dass die beiden Arme 2, 3 sich sowohl horizontal wie auch vertikal erstrecken.

Am ersten Arm 7 kann ein erstes Bearbeitungswerkzeug am ersten Befestigungsbereich 5 befestigt werden. Am zweiten Befestigungsbereich 6, der am zweiten Arm 4 angeordnet ist, kann ein zweites Bearbeitungswerkzeug befestigt werden. Das erste Bearbeitungswerkzeug sowie das zweite Bearbeitungswerkzeug wirken zusammen, um ein zwischen den Bearbeitungswerkzeugen liegendes Bandmaterial (nicht gezeigt) zu bearbeiten, insbesondere zu Schneiden oder dreidimensional zu formen. Die beiden Bearbeitungswerkzeuge können über Antriebe 36, 37, 38 bewegt werden, insbesondere um diese aufeinander zu zubewegen und/oder um diese in Drehung zu versetzen.

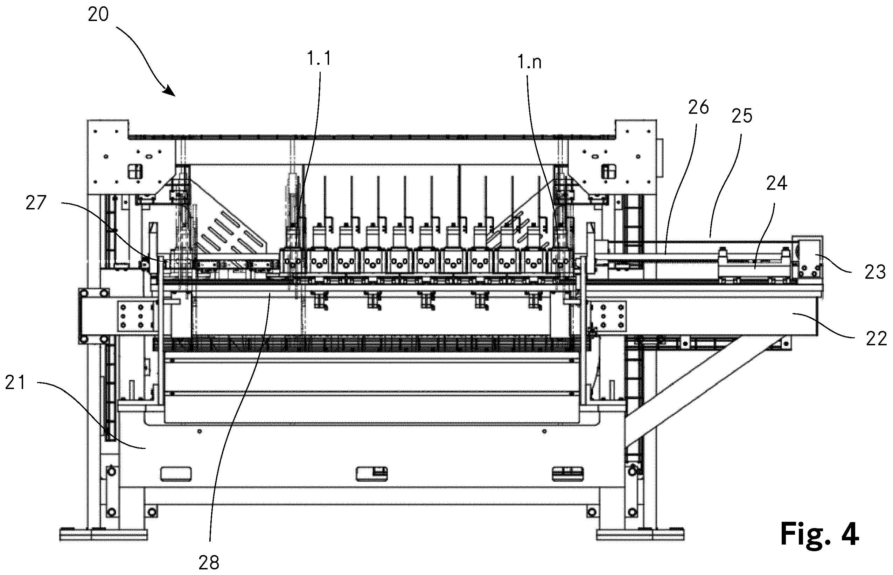

Der Träger 1 verfügt bei der gezeigten Ausführungsform ferner über eine Stangenklemmung 46, mit welcher der Träger 1 selektiv an eine Schubstange 22 einer Vorrichtung (siehe Fig. 4) gekoppelt werden kann, um entlang der Linearführungen 27, 28 bewegt zu werden. Die Stangenklemmung verfügt bei der gezeigten Ausführungsform über einen Pneumatikantrieb 47, mit welchem eine selektive Klemmung des Trägers 1 mit der Schubstange 22 ermöglicht wird. Am zweiten Ende des erste Arms 2 ist weiter der Haltearm 9 angebracht, an welchem eine Schleppkette (nicht gezeigt) befestigt werden kann, z. B. um die an den Befestigungsbereichen 5, 6 angebrachten Bearbeitungswerkzeuge bzw. deren Antriebe 36, 37, 38 mit Steuersignalen, Strom, Druckluft oder Flüssigkeiten versorgen zu können.

Um Leitungen und/oder I<abel vom Haltearm zu den Bearbeitungswerkzeugen bzw. deren Antrieben 36, 37, 38 zu führen, verfügt der Träger über eine erste I<abelführung 10 sowie über eine zweite I<abelführung 11. Die erste I<abelführung 10 dient dazu, Kabel und/oder Leitungen vom Haltearm 9 zum ersten Bearbeitungswerkzeug bzw. dessen erster Antrieb 36 zu führen. Die zweite I<abelführung 11 dient dazu, Kabel und/oder Leitungen vom Haltearm 9 zum zweiten Bearbeitungswerkzeug bzw. dessen zweiter Antrieb 37 und dritter Antrieb 38 zu führen.

Die Fig. 4 zeigt eine erfindungsgemässe Vorrichtung 20 mit mehreren Trägern 1.1 - 1.n. Die Vorrichtung 20 verfügt über ein Gestell 21, mit welchem die Vorrichtung 20 auf dem Boden steht und an welchem die einzelnen Komponenten der Vorrichtung 20 angebracht sind. Die Vorrichtung 20 umfasst ferner zwei parallel zueinander angeordnete und im ersten Abstand zueinander stehende Linearführungen 27, 28. Die Träger 1.1 - 1.n sind jeweils beweglich mittels ihrer zwei Schlitten 7, 8 an den zwei parallelen Linearführungen 27, 28 angeordnet. Die Träger 1.1 - 1.n können mittels einer auf dem Gestell 21 der Vorrichtung 20 beweglich angeordneten und parallel zu den Linearführungen 27, 28 stehenden Schubstange 26 entlang der Linearführungen 27, 28 bewegt werden. Dabei ist jeder der einzelnen Träger 1.1 - 1.n selektiv jeweils über eine I<opplungseinrichtung mit der Schubstange koppelbar, wobei die I<opplungseinrichtungen als Stangenklemmung 46 ausgeführt sind. Somit kann ein einzelner, mehrere oder auch alle Träger 1.1 - 1.n durch I<oppeln mit der Schubstange 26 bewegt werden. Die Schubstange 26 ist an einem Ende auf einem Wagen 24, welcher auf einem Ausleger 22 des Gestells 21 linear beweglich angeordnet ist, befestigt. Der Wagen 24 ist hierbei parallel zu den Linearführungen 27, 28 beweglich. Ein Motor 23, der vorzugsweise als Elektromotor ausgestaltet ist, ist über einen Zahnriemen 25 mit dem Wagen 24 verbunden, so dass der Wagen 24 mittels des Motors 23 hin und her bewegt werden kann. Je nach Anwendung kann die Vorrichtung 20 über eine unterschiedliche Anzahl an Trägern 1.1 - 1.n verfügen. Die Vorrichtung 20 wird vorzugsweise zum Schneiden und/oder dreidimensionalen Schneiden von Formteilen aus einem Bandmaterial eingesetzt. Dementsprechend sind an den Befestigungsbereichen 5, 6 der Träger 1.1 - 1.n Stanz- und/oder Tiefziehwerkzeuge angebracht.

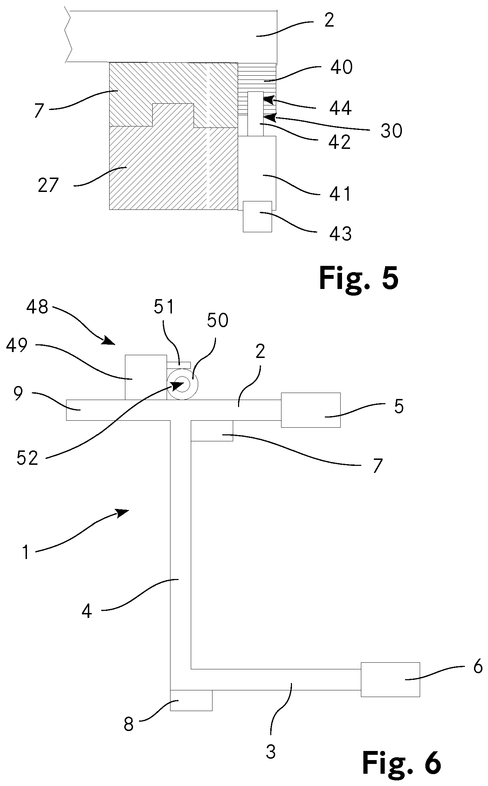

Die Fig. 5 zeigt das Zusammenwirken einer Ausführungsform eines Positionierelements 40 mit einem Verriegelungselement 41. Das Positionierelement 40 ist bei der gezeigten Ausführungsform am ersten Arm 2 angeordnet, während das Verriegelungselement 41 an einer Linearführung, bei der gezeigten Ausführungsform an der ersten Linearführung 27, angebracht ist. Alternativ kann das Verriegelungselement 41 jedoch auch an einer anderen Komponente der Vorrichtung 20, insbesondere dem Gestell 21 angebracht sein. Das Verriegelungselement 41 verfügt über einen Positionierstift 42, welcher von einem eingefahrenen Zustand (nicht gezeigt) in den gezeigten ausgefahrenen Zustand gebracht werden kann. Der Positionierstift 42 greift bei der gezeigten Ausführungsform in eine Bohrung 44 des Positionierelements 40 ein. Die Bohrung 44 ist zylindrisch und verfügt über eine konische Öffnung, um eine automatische Zentrierung des Positionierstiftes 42 innerhalb der Bohrung 44 zu ermöglichen. Der Positionierstift 42 wird mittels eines Aktuators 43, insbesondere eines pneumatischen Aktuators, linear verfahren und ist mittels eines Federelements (nicht gezeigt), welches innerhalb des Verriegelungselements 41 angeordnet ist, in den ausgefahrenen Zustand vorgespannt.

Die Fig. 6 zeigt schematisch eine weitere Ausführungsform eines erfindungsgemässen Trägers 1 mit einem Antrieb 48, der teilweise auf dem ersten Arm 2 sowie auf dem Haltearm 9 angeordnet ist. Der Antrieb 48 weist in der gezeigten Ausführungsform einen Motor 49, insbesondere einen Elektromotor auf, der über eine Schnecke 51 eine Hohlwelle 50 in Drehung versetzen kann. Die Hohlwelle 50 weist eine zylindrische Durchgangsöffnung 52 auf, in welcher eine Gewindestange (nicht gezeigt) eingeführt werden kann. Die Hohlwelle 50 weist innerhalb der zylindrischen Durchgangsöffnung 52 mindestens einen Stift oder ein Innengewinde (beide nicht gezeigt) auf, welche mit der Gewindestange in Eingriff gebracht werden kann. Durch Drehen der Hohlwelle 50 mittels des Motors 49 kann der Träger 1 demnach entlang einer in die zylindrische Durchgangsöffnung aufgenommenen Gewindestange bewegt werden.

## Patentansprüche

1. Träger für Bearbeitungswerkzeuge für ein Bandmaterial umfassend:
a) einen ersten Arm (2) mit einem ersten Ende und einem zweiten Ende;
b) einen ersten Befestigungsbereich (5) für ein oberes Bearbeitungswerkzeug, wobei der erste Befestigungsbereich (5) im Bereich des ersten Endes des ersten Arms (2) angeordnet ist;
c) einen zweiten Arm (3), der parallel zum ersten Arm (2) und zu diesem in einem ersten Abstand angeordnet ist, wobei der zweite Arm (3) ein drittes und ein viertes Ende aufweist;
d) einen zweiten Befestigungsbereich (6) für ein unteres Bearbeitungswerkzeug, wobei der zweite Befestigungsbereich (6) im Bereich des dritten Endes des zweiten Arms (3) angeordnet ist, derart, dass das obere Bearbeitungswerkzeug und das untere Bearbeitungswerkzeug zusammenwirken können, um ein zwischen dem ersten Arm und dem zweiten Arm verlaufendes Bandmaterial zu bearbeiten;
e) einen Verbindungsarm (4), welcher mit dem zweiten Ende des ersten Arms (2) sowie mit dem vierten Ende des zweiten Arms (3) verbunden ist;
f) einen ersten Schlitten (7) und einen zweiten Schlitten (8), mit welchen der Träger (1) auf zwei parallelen Linearführungen (27, 28) beweglich angeordnet werden kann, wobei der erste Schlitten (7) am ersten Arm (2) und der zweite Schlitten (8) am zweiten Arm (3) angeordnet sind.

2. Träger gemäss Anspruch 1, **dadurch gekennzeichnet, dass** der erste Schlitten (7) und der zweite Schlitten (8) derart ausgestaltet sind, dass der Träger (1) quer zur Ausdehnungsrichtung des ersten Arms (2) und des zweiten Arms (3) auf zwei Linearführungen (27, 28) bewegbar angeordnet werden kann.

3. Träger gemäss einem der Ansprüche 1 oder 2, **dadurch gekennzeichnet, dass** am Träger (1) eine Kopplungseinrichtung (40) angebracht ist, mit der sich der Träger (1) selektiv mit einer parallel zu zwei Linearführungen (27, 28), auf denen die Schlitten (7, 8) angeordnet werden können, beweglichen Schubstange (22) gekoppelt werden kann, so dass der Träger (1) im gekoppelten Zustand entlang der Linearführungen (27, 28) bewegt werden kann.

4. Träger gemäss einem der Ansprüche 1 oder 2, **dadurch gekennzeichnet, dass** am Träger (1) ein Antrieb (48), insbesondere ein hydraulischer, elektro- oder elektromechanischer Antrieb angeordnet ist, mit welchem der Träger (1) entlang zweier Linearführungen (27, 28), auf denen die zwei Schlitten (7, 8) beweglich angeordnet werden können, bewegt werden kann.

5. Träger gemäss Anspruch 4, **dadurch gekennzeichnet, dass** der Träger (1) über eine Hohlwelle (50) verfügt, welche mittels eines Elektromotors (49) in Drehung versetzt werden kann, wobei die Hohlwelle (50) im Innern über mindestens einen Stift oder über ein Innengewinde verfügt, um die Hohlwelle (50) in Eingriff mit einer Gewindestange zu bringen, welche in der Hohlwelle (50) angeordnet werden kann.

6. Träger gemäss einem der Ansprüche 1 bis 5, **dadurch gekennzeichnet, dass** der Träger (1) über einen Haltearm (9) verfügt, an welchem eine Schleppkette angebracht werden kann.

7. Träger gemäss Anspruch 6, **dadurch gekennzeichnet, dass** der Haltearm (1) sich in eine Richtung erstreckt, der der Ausdehnungsrichtung des ersten Arms (2) und des zweiten Arms (3) entgegengesetzt ist.

8. Träger gemäss einem der Ansprüche 1 bis 7, **dadurch gekennzeichnet, dass** der Träger (1) über ein Positionierelement (40) verfügt, mit welchem der Träger (1) an einer Position entlang zweier Linearführungen (27, 28), auf denen die zwei Schlitten (7, 8) beweglich angeordnet werden können, verriegelt werden kann.

9. Vorrichtung zum Schneiden und/oder dreidimensionalen Formen eines Bandmaterials umfassend mindestens einen Träger (1) gemäss einem der Ansprüche 1 bis 8 sowie zwei parallele Linearführungen (27, 28), auf denen der erste Schlitten (7) sowie der zweite Schlitten (8) des mindestens einen Trägers (1) beweglich angeordnet sind.

10. Vorrichtung gemäss Anspruch 9, **dadurch gekennzeichnet, dass** die Vorrichtung (20) über Fördermittel verfügt, um ein Bandmaterial zwischen den ersten Arm (2) und den zweiten Arm (3) des mindestens einen Trägers (1) zuzuführen und zwischen diesen linear zu bewegen.

11. Vorrichtung gemäss Anspruch 10, **dadurch gekennzeichnet, dass** die Fördermittel derart konfiguriert sind, dass ein Bandmaterial in der Ausdehnungsrichtung des ersten Arms (7) und des zweiten Arms (8) zwischen diesen zugeführt und zwischen diesen linear bewegt wird, wobei die Vorrichtung (20) über mindestens ein Schneidelement verfügt, mit welchem das Bandmaterial nach dessen Bearbeitung durch am ersten Befestigungsbereich (5) und am zweiten Befestigungsbereich (6) angebrachten Bearbeitungswerkzeugen abgelängt werden kann.

12. Vorrichtung gemäss einem der Ansprüche 9 bis 11, **dadurch gekennzeichnet, dass** die Vorrichtung (20) über eine linear bewegliche Schubstange (22) oder über eine linear bewegliche oder starre Gewindestange verfügt, mit Hilfe welcher der mindestens eine Träger (1) entlang der zwei Linearführungen (27, 28) bewegt werden kann.

13. Vorrichtung gemäss einem der Ansprüche 9 bis 12, **dadurch gekennzeichnet, dass** die Vorrichtung (20) über mindestens eine Schleppkette verfügt, welche mit dem mindestens einen Träger (1) verbunden ist, vorzugsweise mit dem Haltearm (9) des mindestens einen Trägers (1).

## Claims

1. A carrier for machining tools for a strip material comprising:
a first arm (2) with a first end and a second end;
a first mounting area (5) for an upper machining tool, the first mounting area (5) being arranged in the region of the first end of the first arm (2);
a second arm (3) arranged parallel to the first arm (2) and at a first distance therefrom, the second arm (3) including a third and a fourth end;
a second mounting area (6) for a lower machining tool, the second mounting area (6) being arranged in the region of the third end of the second arm (3) such that the upper machining tool and the lower machining tool can cooperate to machine a strip material running between the first arm and the second arm;
a connecting arm (4) connected to the second end of the first arm (2) and to the fourth end of the second arm (3);
a first carriage (7) and a second carriage (8) with which the carrier (1) can be movably arranged on two parallel linear guides (27, 28), the first carriage (7) being arranged on the first arm (2) and the second carriage (8) being arranged on the second arm (3).

2. Carrier according to claim 1, **characterized in that** the first carriage (7) and the second carriage (8) are configured such that the carrier (1) can be movably arranged on two linear guides (27, 28) transversely to the extension direction of the first arm (2) and the second arm (3).

3. Carrier according to one of claims 1 or 2, **characterized in that** a coupling device (40) is attached to the carrier (1) with which the carrier (1) can be selectively coupled to a push rod (22) movable parallel to two linear guides (27, 28) on which the carriages (7, 8) can be arranged, so that the carrier (1) can be moved along the linear guides (27, 28) in the coupled state.

4. Carrier according to one of claims 1 or 2, **characterized in that** a drive (48), a hydraulic, electro- or electromechanical drive, is arranged on the carrier (1) with which the carrier (1) can be moved along two linear guides (27, 28) on which the two carriages (7, 8) can be movably arranged.

5. Carrier according to claim 4, **characterized in that** the carrier (1) comprises a hollow shaft (50) which can be set in rotation by means of an electric motor (49), the hollow shaft (50) having at least one pin or an internal thread in its interior in order to bring the hollow shaft (50) into engagement with a threaded rod which can be arranged within the hollow shaft (50).

6. Carrier according to one of claims 1 to 5, **characterized in that** the carrier (1) comprises a holding arm (9) to which a drag chain can be attached.

7. Carrier according to claim 6, **characterized in that** the holding arm (1) extends in a direction which is opposite to the extension direction of the first arm (2) and the second arm (3).

8. Carrier according to one of claims 1 to 7, **characterized in that** the carrier (1) comprises a positioning element (40) with which the carrier (1) can be locked at a position along two linear guides (27, 28) on which the two carriages (7, 8) can be movably arranged.

9. A device for cutting and/or three-dimensionally shaping a strip material comprising at least one carrier (1) according to one of claims 1 to 8 and two parallel linear guides (27, 28) on which the first carriage (7) and the second carriage (8) of the at least one carrier (1) are movably arranged.

10. Device according to claim 9, **characterized in that** the device (20) comprises conveying means for feeding and linearly moving a strip material between the first arm (2) and the second arm (3) of the at least one carrier (1).

11. Device according to claim 10, **characterized in that** the conveying means are configured to feed and linearly move a strip material between the first arm (7) and the second arm (8) in the extension direction of the first arm (7) and the second arm (8), wherein the device (20) comprises at least one cutting element with which the strip material, after being processed, can be cut to length by processing tools attached to the first mounting area (5) and the second mounting area (6).

12. Device according to one of claims 9 to 11, **characterized in that** the device (20) comprises a linearly movable push rod (22) or a linearly movable or rigid threaded rod with which the at least one carrier (1) can be moved along the two linear guides (27, 28).

13. Device according to one of claims 9 to 12, **characterized in that** the device (20) comprises at least one drag chain which is connected to the at least one carrier (1), preferably to the holding arm (9) of the at least one carrier (1).

## Revendications

1. Support pour des outils d'usinage d'une matière en bande, comprenant :
a) un premier bras (2), doté d'une première extrémité et d'une deuxième extrémité ;
b) une première zone de fixation (5) pour un outil d'usinage supérieur, la première zone de fixation (5) étant placée dans la zone de la première extrémité du premier bras (2) ;
c) un deuxième bras (3), qui est placé à la parallèle du premier bras (2) et avec un premier écart par rapport à celui-ci, le deuxième bras (3) comportant une troisième et une quatrième extrémités ;
d) une deuxième zone de fixation (6) pour un outil d'usinage inférieur, la deuxième zone de fixation (6) étant placée dans la zone de la troisième extrémité du deuxième bras (3), de telle sorte que l'outil d'usinage supérieur et l'outil d'usinage inférieur puissent coopérer, pour usiner une matière en bande s'écoulant entre le premier bras et le deuxième bras ;
e) un bras de liaison (4), lequel est relié avec la deuxième extrémité du premier bras (2), ainsi qu'avec la quatrième extrémité du deuxième bras (3) ;
f) un premier chariot (7) et un deuxième chariot (8), avec lesquels le support (1) peut être placé de manière déplaçable sur deux guidages linéaires (27, 28) parallèles, le premier chariot (7) étant placé sur le premier bras (2) et le deuxième chariot (8) étant placé sur le deuxième bras (3).

2. Support selon la revendication 1, **caractérisé en ce que** le premier chariot (7) et le deuxième chariot (8) sont conçus de telle sorte que le support (1) puisse être placé de manière déplaçable sur deux guidages linéaires (27, 28), à la transversale de la direction d'extension du premier bras (2) et du deuxième bras (3).

3. Support selon l'une quelconque des revendications 1 ou 2, **caractérisé en ce que** sur le support (1) est monté un système d'accouplement (40), avec lequel le support (1) peut être accouplé sélectivement avec une barre de poussée (22) déplaçable à la parallèle de deux guidages linéaires (27, 28), sur lesquels peuvent être placés les chariots (7, 8), de sorte que lorsqu'il est accouplé, le support (1) puisse être déplacé le long des guidages linéaires (27, 28).

4. Support selon l'une quelconque des revendications 1 ou 2, **caractérisé en ce que** sur le support (1) est placé un entraînement (48), notamment un entraînement hydraulique, électrique ou électromécanique, avec lequel le support (1) peut être déplacé le long de deux guidages linéaires (27, 28), sur lesquels les deux chariots (7, 8) peuvent être placés de manière déplaçable.

5. Support selon la revendication 4, **caractérisé en ce que** le support (1) dispose d'un arbre creux (50), lequel peut être mis en rotation au moyen d'un moteur électrique (49), l'arbre creux (50) disposant à l'intérieur d'au moins une tige ou d'un taraudage, pour amener l'arbre creux (50) en engagement avec une barre filetée, laquelle peut être placée dans l'arbre creux (50).

6. Support selon l'une quelconque des revendications 1 à 5, **caractérisé en ce que** le support (1) dispose d'un bras de retenue (9), sur lequel peut être montée une chaîne de traction.

7. Support selon la revendication 6, **caractérisé en ce que** le bras de retenue (1) s'étend dans une direction, qui est opposée à la direction d'extension du premier bras (2) et du deuxième bras (3).

8. Support selon l'une quelconque des revendications 1 à 7, **caractérisé en ce que** le support (1) dispose d'un élément de positionnement (40), avec lequel le support (1) peut être verrouillé sur une position le long de deux guidages linéaires (27, 28), sur lesquels les deux chariots (7, 8) peuvent être placés de manière déplaçable.

9. Dispositif, destiné à couper et / ou à façonner en trois dimensions une matière en bande, comprenant au moins un support (1) selon l'une quelconque des revendications 1 à 8, ainsi que deux guidages linéaires (27, 28) parallèles, sur lesquels le premier chariot (7), ainsi que le deuxième chariot (8) de l'au moins un support (1) sont placés de manière déplaçable.

10. Dispositif selon la revendication 9, **caractérisé en ce que** le dispositif (20) dispose de moyens de convoyage, pour amener une matière en bande entre le premier bras (2) et le deuxième bras (3) de l'au moins un support (1) et la déplacer de manière linéaire entre ceux-ci.

11. Dispositif selon la revendication 10, **caractérisé en ce que** les moyens de convoyage sont configurés de telle sorte, qu'une matière en bande soit amenée dans la direction d'extension du premier bras (7) et du deuxième bras (8), entre ceux-ci et déplacée de manière linéaire entre ceux-ci, le dispositif (20) disposant d'au moins un élément de coupe, avec lequel, après son usinage, la matière en bande peut être coupée en longueur par des outils d'usinage montés sur la première zone de fixation (5) et sur la deuxième zone de fixation (6).

12. Dispositif selon l'une quelconque des revendications 9 à 11, **caractérisé en ce que** le dispositif (20) dispose d'une barre de poussée (22) déplaçable de manière linéaire ou d'une barre filetée déplaçable de manière linéaire ou rigide, à l'aide de laquelle l'au moins un support (1) peut être déplacé le long de deux guidages linéaires (27, 28).

13. Dispositif selon l'une quelconque des revendications 9 à 12, **caractérisé en ce que** le dispositif (20) dispose d'au moins une chaîne de traction, laquelle est reliée avec l'au moins un support (1), de préférence avec le bras de retenue (9) de l'au moins un support (1).
